# EUROPÄISCHE PATENTSCHRIFT

(11) **EP 1 062 787 B1**
(45) Veröffentlichungstag und Bekanntmachung des Hinweises auf die Patenterteilung: **27.08.2003**
(21) Anmeldenummer: 99907559.1
(22) Anmeldetag: 22.02.1999
(51) Int. Cl.: H04L 29/14, H04L 12/413, H04L 12/26

(54) **LOKALES NETZWERK, INSBESONDERE ETHERNET-NETZWERK, MIT REDUNDANZEIGENSCHAFTEN SOWIE REDUNDANZMANAGER**
LOCAL NETWORK, ESPECIALLY ETHERNET NETWORK, WITH REDUNDANCY PROPERTIES AND REDUNDANCY MANAGER
RESEAU LOCAL, NOTAMMENT RESEAU ETHERNET, AYANT DES PROPRIETES DE REDONDANCE ET UN GESTIONNAIRE DE REDONDANCE

(30) Priorität: 11.03.1998 DE 19810587
(43) Veröffentlichungstag der Anmeldung: 27.12.2000
(73) Patentinhaber: SIEMENS AKTIENGESELLSCHAFT, 80333 München (DE); Hirschmann Electronics GmbH & Co. KG, 72654 Neckartenzlingen (DE)
(72) Erfinder: GLAS, Karl, D-91074 Herzogenaurach (DE); LOHMEYER, Joachim, D-90537 Feucht (DE); REUSCHEN, Rolf, D-72639 Neuffen (DE); SCHMID, Bernhard, D-73061 Ebersbach (DE)
(74) Vertreter: Berg, Peter, Dipl.-Ing.
(86) Internationale Anmeldenummer: EP9901125
(87) Internationale Veröffentlichungsnummer: WO99046908

(56) Entgegenhaltungen:
- EP-A- 0 052 390
- EP-A- 0 403 763
- EP-A- 0 519 712
- US-A- 4 354 267

## Beschreibung

Die Erfindung betrifft ein lokales Netzwerk, insbesondere ein Ethernet-Netzwerk, mit Redundanzeigenschaften sowie einen Redundanzmanager nach dem Oberbegriff des Anspruchs 1 bzw. dem Oberbegriff des Anspruchs 4.

Ethernet-Netzwerke und ihre Eigenschaften sind beispielsweise aus DE 19 513 316 A1, DE 1.9 513 315 A1, EP 688 121 A1, US 5 469 503 A, WO 95 15 641 A1 oder US 4 800 559 A bekannt. Bislang wurde redundante Kommunikation im Rahmen von Automatisierungslösungen in der Regel durch doppelten Aufbau der kompletten Automatisierungslösung, bestehend aus Teilnehmern und Netzwerk-Infrastruktur, realisiert (Doppelbussystem).

Aus der EP 0 519 712 A2 und der EP 0 403 763 B1 ist jeweils ein lineares Ethernet-Netzwerk bekannt, bei welchem die beiden Linienenden des Netzwerks an einen Redundanzmanager angeschlossen sind, der diese im fehlerfreien Fall voneinander trennt und im Fehlerfall miteinander verbindet. Der Redundanzmanager prüft, ob an den beiden Linienenden ein übertragenes Datensignal innerhalb eines vorgegebenen Zeitraums gleichzeitig auftritt und somit das lineare Netzwerk fehlerfrei arbeitet. Dieses Prüfkriterium kann aber nur in einem linearen Netzwerk angewendet werden, in welchem gewährleistet ist, daß übertragene Datentelegramme im fehlerfreien Fall auch tatsächlich an beiden Linienenden auftreten. Diese Bedingung ist beispielsweise in einem linearen Netzwerk erfüllt, das mit Layer-1-Komponenten aufgebaut ist, d. h. mit Komponenten, die lediglich eine Regenerierung oder Verstärkung der Telegramme aber keine Adreßauswertung und keine Telegrammlenkung durchführen. Bei einem Netzwerk mit Layer-2-Komponenten, beispielsweise Bridges, die Ziel- und Quelladresse der Telegramme analysieren und die Telegramme ihren Adressen entsprechend auf angeschlossene Segmente weiterleiten, also eine Telegrammlenkung durchführen, tritt dagegen ein übertragenes Datensignal auch im fehlerfreien Fall nicht zwangsläufig an beiden Linienenden gleichzeitig auf. Dieses Prüfkriterium ist daher bei einem linearen Netzwerk mit Layer-2-Komponenten nicht immer anwendbar.

Aus der EP 0 052 390 A1 ist ein Netzwerk mit redundanten Übertragungsleitungen bekannt, bei dem einer der Übertragungsteilnehmer in einem starren Zeittakt Testnachrichten in Form von Prüfpaketen an die anderen Teilnehmer aussendet, die mittels einer Empfangsschaltung ausgewertet werden. Eine nachgeschaltete Auswertelogik erzeugt bei fehlerfreien Prüfpaketen ein Umschaltsignal für den Empfang von einer anderen Busleitung sowie ein Meldesignal zur Anzeige einer fehlerhaften Busleitung.

Eine weitere Möglichkeit der Medienredundanz liefern Layer-2-Komponenten (Bridge/Switch) unter Verwendung des genormten Spanning Tree Protokolls (IEEE 802.1D). Da dieses Protokoll beliebig vermaschte Netzstrukturen behandeln kann, ist es relativ komplex. Unter Verwendung der Standard-Parameter im Spanning Tree Protokoll vergehen nach Eintritt oder Beseitigung eines Fehlers im Netzwerk je nach Komplexität der Netzwerkstruktur und Anzahl der Layer-2-Komponenten etwa 30 bis 60 Sekunden, bis das Netzwerk wieder in einen stabilen Zustand übergeht. Durch eine Optimierung der einzelnen Parameter ist zwar eine Verkürzung dieser Zeit möglich; die minimal erreichbare Reaktionszeit kann jedoch nie kürzer als etwa 5 Sekunden werden. Diese Zeitspanne ist allerdings im Rahmen von Automatisierungslösungen nicht akzeptabel, da während dieser Zeit keine produktive Kommunikation zwischen den Automatisierungssystemen ablaufen kann. Die angeschlossenen Teilnehmer würden logische Verbindungen abbauen. Der Prozeß würde unkoordiniert weiterlaufen oder es müßte eine Notabschaltung erfolgen.

Die Aufgabe der vorliegenden Erfindung besteht darin, eine schnelle Medienredundanz in einem lokalen Netzwerk, insbesondere in einem Ethernet-Netzwerk, zu erreichen und einen dafür geeigneten Redundanzmanager zu schaffen. Schnelle Medienredundanz heißt hier, daß sich das Netzwerk nach Eintritt oder Beseitigung eines Fehlers im Sub-Sekundenbereich zu einer funktionsfähigen Struktur rekonfiguriert. Dies ist eine für Automatisierungslösungen kritische Zeitspanne.

Zur Lösung dieser Aufgabe weist das neue lokale Netzwerk der eingangs genannten Art die im kennzeichnenden Teil des Anspruchs 1 und der neue Redundanzmanager die im kennzeichnenden Teil des Anspruchs 4 angegebenen Merkmale auf. In den Unteransprüchen sind vorteilhafte Weiterbildungen beschrieben.

Als Netzwerktopologie wird eine Linie aus Layer-2-Komponenten gewählt. Die beiden Linienenden des Netzwerks sind an einen Redundanzmanager angeschlossen, der als Layer-2-Komponente mit spezieller Betriebssoftware zur Steuerung der Netzstruktur ausgeführt sein kann, im fehlerfreien Fall die beiden Linienenden voneinander trennt und im Fehlerfall, beispielsweise bei einer Unterbrechung einer Leitung oder bei einem Ausfall einer Layer-2-Komponente, die beiden Linienenden miteinander verbindet. Dadurch wird erneut eine funktionierende Linie hergestellt. Für die schnelle und sichere Erkennung von Fehlern im Netzwerk oder deren Beseitigung können zwei Mechanismen verwendet werden, die vorteilhaft in Kombination eingesetzt werden können.
Fehlererkennungsmechanismus 1:
Jede Layer-2-Komponente innerhalb des Netzwerks erkennt sowohl Ausfälle einer Datenleitung oder einer benachbarten Layer-2-Komponente als auch die Beseitigung dieser Fehler mit den in IEEE 802.3 standardisierten Mechanismen. Nach Erkennen eines Fehlers sendet die Layer-2-Komponente ein spezielles Telegramm "Fehler aufgetreten" an den Redundanzmanager, das diesem den erkannten Fehler signalisiert. Nach Beseitigung eines Fehlers sendet die Layer-2-Komponente ein spezielles Telegramm "Fehler beseitigt" an den Redundanzmanager, das diesem wiederum die Änderung der Netzstruktur signalisiert.

Fehlererkennungsmechanismus 2:
Der Redundanzmanager speist in vorgegebenen Zeitintervallen T₁ Testtelegramme in die beiden Linienenden ein. Aus dem Empfang der Testtelegramme an den jeweils anderen Linienenden leitet er den Befehl zur Trennung der beiden Linienenden ab. Aus dem Nichtempfang der Testtelegramme an dem jeweils anderen Linienende innerhalb eines vorgegebenen Zeitintervalls T₂ = n T₁, d. h. einem Verlust der Testtelegramme auf der Linie, erkennt der Redundanzmanager einen Fehler im Netzwerk. Bei geeigneter Wahl der Parameter T₁ und T₂ erfolgt die Fehlererkennung in einem Zeitintervall, das wesentlich unter einer Sekunde liegt.

Der Redundanzmanager sendet nach Verbinden der Linienenden, d. h. nach dem Auftreten eines Fehlers, oder nach dem Trennen der Linienenden, d. h. nach Beseitigung eines Fehlers, ein spezielles Telegramm "Netztopologie Änderung" an die übrigen Layer-2-Komponenten, um diese von der Änderung der Netztopologie zu informieren. Nach Empfang dieses Telegramms löschen die Layer-2-Komponenten dynamische Einträge in ihren Adreßtabellen; die beispielsweise entsprechend der Definition Adreßtabelle/Filtering Database in IEEE 802.1D aufgebaut sein können. Auf diese Weise wird sichergestellt, daß alle Telegramme unmittelbar nach der Rekonfiguration des Netzwerks die Teilnehmer wieder erreichen.

Die beschriebenen Mechanismen gewährleisten beim Auftreten oder Beseitigen von Fehlern eine schnelle Rekonfiguration des Netzwerks zu einer funktionierenden Struktur in einem Zeitintervall, das wesentlich unter einer Sekunde liegt.

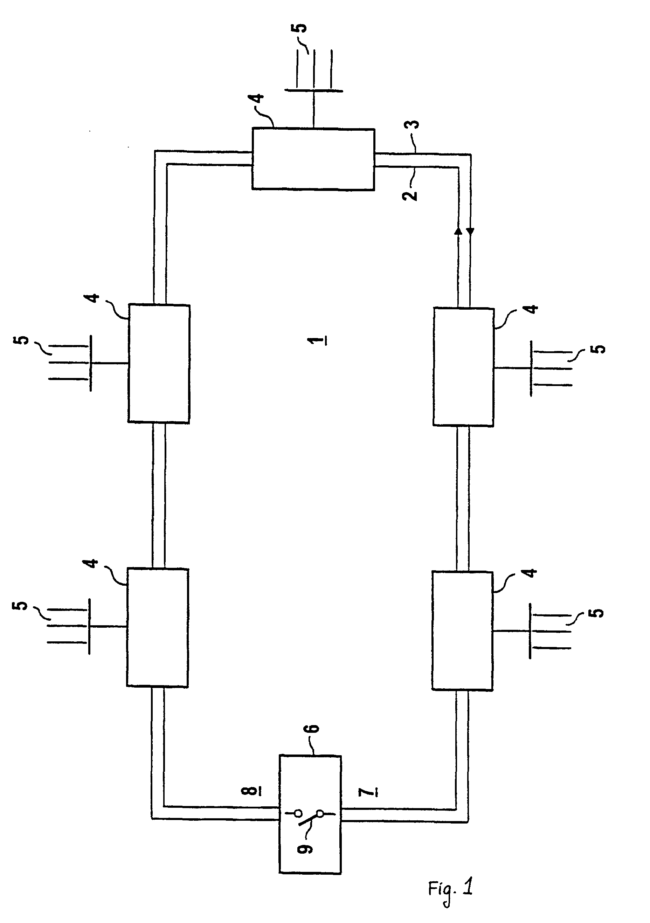

In der einzigen Figur ist ein Netzwerk mit Redundanzeigenschaften dargestellt.

Anhand dieses vereinfachten Ausführungsbeispiels sei die Erfindung näher erläutert. Ein ringförmiges Ethernet-Netzwerk 1 verwendet kommerzielle Komponenten, wie z. B. ein Glasfaserkabel mit Fasern 2 und 3, die zum Senden oder zum Empfangen von Telegrammen dienen. Alternativ könnte das Ethernet-Netzwerk mit elektrischen Komponenten, wie z. B. einem Twisted Pair Kabel mit zwei Leiterpaaren, aufgebaut werden. In vorgegebenen Abständen, die z. B. mehrere Kilometer betragen können, befinden sich Schaltmodule 4, die als Layer-2-Komponenten ausgeführt sind und über welche Verbindungen 5 zu weiteren nicht gezeigten Teilnehmern führen. Diese Teilnehmer können z. B. Automatisierungssysteme, Bedien- und Beobachtungsstationen, Server, Drucker, weitere Netze usw. sein. Zwei Linienenden 7 und 8 sind an einen Redundanzmanager 6 angeschlossen, der das Netzwerk überwacht und gegebenenfalls rekonfiguriert. Der Redundanzmanager 6 arbeitet wie ein intelligenter Schalter 9. Im fehlerfreien Fall trennt er die beiden Linienenden 7 und 8 voneinander entsprechend einem geöffneten Schalter 9. Im Fehlerfall verbindet er die beiden Linienenden 7 und 8 miteinander, d. h., er leitet alle an einem Linienende 7 empfangenen Nachrichten an das andere Linienende 8 weiter und umgekehrt. Das entspricht einem Schalter 9 in geschlossener Stellung. Zur Steuerung des Schaltvorgangs speist der Redundanzmanager 6 in kurzen Zeitintervallen Testtelegramme in die beiden Linienenden 7, 8 ein und empfängt diese Testtelegramme auf dem jeweils gegenüberliegenden Linienende 8 bzw. 7. Empfängt er innerhalb eines Zeitintervalls T₂ mindestens ein Testtelegramm, so wird die Netzstruktur als fehlerfrei erkannt. Dabei ist der Schalter 9 bereits offen oder er wird wieder geöffnet. Trifft in einem vorgegebenen Zeitintervall T₂ an keinem der beiden an den Redundanzmanager angeschlossenen Linienenden ein Testtelegramm ein oder empfängt der Redundanzmanager 6 ein spezielles Signalisierungstelegramm "Fehler aufgetreten" einer Layer-2-Komponente 4, erkennt der Redundanzmanager 6 einen Fehler im Netzwerk und verbindet die beiden zuvor getrennten Linienenden 7 und 8. Das entspricht einem Schließen des Schalters 9. Damit ist eine funktionsfähige Linie wieder hergestellt und die Kommunikation gewährleistet. Da diese Rekonfiguration des Netzwerks in kürzester Zeit, d. h. in weniger als einer Sekunde, geschieht, ist auch sichergestellt, daß die angeschlossenen Teilnehmer keine logischen Kommunikationsverbindungen abbauen können, so daß die Kommunikation ohne Störung weiterläuft und eine mit dem Netzwerk realisierte Automatisierungslösung unbeeinflußt bleibt.

Empfängt der Redundanzmanager 6 bei geschlossenem Schalter 9 ein Testtelegramm an einem der beiden Linienenden 7 oder 8 oder empfängt er ein Signalisierungstelegramm "Fehler beseitigt", so öffnet er den Schalter 9 und sendet ein Telegramm "Netztopologie Änderung" an alle Layer-2-Komponenten 4. Dadurch wird wieder eine funktionsfähige Linienstruktur hergestellt.

Der Vorteil der geschilderten Lösung ist die Verwendung der im Vergleich zur Doppelbusstruktur kostensparenden Ringstruktur unter Beibehaltung der schnellen Medienredundanz. Die erwähnte Ringstruktur erlaubt zudem die Einbindung von Teilnehmern mit nur einer Kommunikationsbaugruppe, was bei Doppelbussystemen unmöglich ist. Die Ringstruktur bietet nicht nur Kostenvorteile im Aufbau des Netzwerks, sondern vereinfacht auch die Hard- und Software der verwendeten Komponenten. Durch die schnelle Medienredundanz wird somit auch mit vergleichsweise niedrigem Aufwand in vorteilhafter Weise eine hohe Verfügbarkeit des lokalen Netzwerks erreicht.

## Patentansprüche

1. Lokales Netzwerk, insbesondere Ethernet-Netzwerk, mit Redundanzeigenschaften, wobei die Topologie des Netzwerks (1) linienförmig ist und die beiden Linienenden (7, 8) an einen Redundanzmanager (6) angeschlossen sind, der dazu ausgebildet ist, im fehlerfreien Fall die beiden Linienenden (7, 8) voneinander zu trennen und im Fehlerfall die beiden Linienenden (7, 8) miteinander zu verbinden, **dadurch gekennzeichnet, daß** sich im Netzwerk Schaltmodule (4) befinden, die als Layer-2-Komponenten ausgeführt sind, daß der Redundanzmanager (6) weiterhin dazu ausgebildet ist, in vorgegebenen Zeitintervallen Testtelegramme in die beiden Linienenden (7, 8) einzuspeisen und aus dem Empfang an dem jeweils anderen Linienende (8, 7) innerhalb eines vorgegebenen Zeitintervalls einen Befehl für eine Trennung der beiden Linienenden (7, 8) abzuleiten und ferner einen Befehl für eine Verbindung der beiden Linienenden abzuleiten, wenn innerhalb eines vorgegebenen Zeitintervalls kein Testtelegramm empfangen wurde.

2. Lokales Netzwerk nach Anspruch 1, **dadurch gekennzeichnet, daß** zumindest eine Layer-2-Komponente (4) dazu ausgebildet ist, Fehler im Netzwerk selbst zu erkennen, ein Telegramm zur Signalisierung eines Fehlers an den Redundanzmanager (6) zu senden und nach Wegfall des Fehlers ein Telegramm zur Signalisierung der Fehlerbeseitigung und einer Änderung der Topologie des Netzwerks an den Redundanzmanager (6) zu senden.

3. Lokales Netzwerk nach Anspruch 1 oder 2, **dadurch gekennzeichnet, daß** der Redundanzmanager (6) weiterhin dazu ausgebildet ist, nach Erkennen oder Beseitigen eines Fehlers ein Telegramm zur Signalisierung einer Änderung der Topologie des Netzwerks zu senden.

4. Redundanzmanager für ein lokales Netzwerk, insbesondere ein Ethernet-Netzwerk, wobei die Topologie des Netzwerks (1) linienförmig ist und die beiden Linienenden (7, 8) an den Redundanzmanager (6) anschließbar sind, der dazu ausgebildet ist, im fehlerfreien Fall die beiden Linienenden (7, 8) voneinander zu trennen und im Fehlerfall die beiden Linienenden (7, 8) miteinander zu verbinden, **dadurch gekennzeichnet, daß** der Redundanzmanager (6) weiterhin dazu ausgebildet ist, in vorgegebenen Zeitintervallen Testtelegramme in die beiden Linienenden (7, 8) einzuspeisen und aus dem Empfang an dem jeweils anderen Linienende (8, 7) innerhalb eines vorgegebenen Zeitintervalls einen Befehl für eine Trennung der beiden Linienenden (7, 8) abzuleiten und ferner einen Befehl für eine Verbindung der beiden Linienenden abzuleiten, wenn innerhalb eines vorgegebenen Zeitintervalls kein Testtelegramm empfangen wurde.

## Claims

1. Local network, particularly Ethernet network, with redundancy properties, the topology of the network (1) being linear and the two line ends (7, 8) being connected to a redundancy manager (6), which is in such a form that in the fault-free case it disconnects the two line ends (7, 8) from each other and in the fault case it connects the two line ends (7, 8) to each other, **characterized in that** in the network there are switching modules (4), which are in the form of layer 2 components, that the redundancy manager (6) is also in such a form that it feeds test messages into both line ends (7, 8) at specified time intervals, and from the reception of the test messages at the other line end (8, 7) in each case within a specified time interval, it deduces a command to disconnect the two line ends (7, 8), and also deduces a command to connect the two line ends if no test message has been received within a specified time interval.

2. Local network according to Claim 1, **characterized in that** at least one layer 2 component (4) is in such a form that it itself detects faults in the network, sends a message to signal a fault to the redundancy manager (6), and after the fault has ceased sends a message to signal the removal of the fault and a change of the topology of the network to the redundancy manager (6).

3. Local network according to Claim 1 or 2, **characterized in that** the redundancy manager (6) is also in such a form that after a fault has been detected or removed, it sends a message to signal a change of the topology of the network.

4. Redundancy manager for a local network, particularly an Ethernet network, the topology of the network (1) being linear, and it being possible to connect the two line ends (7, 8) to the redundancy manager (6), which is in such a form that in the fault-free case it disconnects the two line ends (7, 8) from each other and in the fault case it connects the two line ends (7, 8) to each other,
**characterized in that** the redundancy manager (6) is also in such a form that it feeds test messages into both line ends (7, 8) at specified time intervals, and from the reception of the test messages at the other line end (8, 7) in each case within a specified time interval, it deduces a command to disconnect the two line ends (7, 8), and also deduces a command to connect the two line ends if no test message has been received within a specified time interval.

## Revendications

1. Réseau local, notamment réseau Ethernet, ayant des propriétés de redondance, la topologie du réseau (1) étant linéaire et les deux extrémités de ligne (7, 8) étant raccordées à un gestionnaire de redondance (6) qui est conçu pour séparer les deux extrémités de ligne (7, 8) l'une de l'autre en l'absence d'erreur et pour relier les deux extrémités de ligne (7, 8) l'une à l'autre en présence d'une erreur, **caractérisé par le fait qu'**il y a dans le réseau des modules de commutation (4) qui sont réalisés comme des éléments dits Layer 2, que le gestionnaire de redondance (6) est aussi conçu pour introduire à des intervalles de temps prédéterminés des télégrammes de test dans les deux extrémités de ligne (7, 8) et pour déduire de la réception à l'autre extrémité de ligne (8, 7) respective dans les limites d'un intervalle de temps prédéterminé une instruction en vue d'une séparation des deux extrémités de ligne (7, 8) ainsi que pour déduire une instruction en vue d'une liaison des deux extrémités de ligne lorsque aucun télégramme de test n'a été reçu dans les limites d'un intervalle de temps prédéterminé.

2. Réseau local selon la revendication 1, **caractérisé par le fait qu'**au moins un élément Layer 2 (4) est conçu pour détecter lui-même des erreurs dans le réseau, pour envoyer au gestionnaire de redondance (6) un télégramme destiné à la signalisation d'une erreur et pour envoyer au gestionnaire de redondance (6), après la disparition de l'erreur, un télégramme destiné à la signalisation de l'élimination d'erreur et d'une modification de la topologie du réseau.

3. Réseau local selon la revendication 1 ou 2, **caractérisé par le fait que** le gestionnaire de redondance (6) est aussi conçu pour envoyer, après la détection ou l'élimination d'une erreur, un télégramme destiné à la signalisation d'une modification de la topologie du réseau.

4. Gestionnaire de redondance pour un réseau local, notamment pour un réseau Ethernet, la topologie du réseau (1) étant linéaire et les deux extrémités de ligne (7, 8) pouvant être raccordées au gestionnaire de redondance (6) qui est conçu pour séparer les deux extrémités de ligne (7, 8) l'une de l'autre en l'absence d'erreur et pour relier les deux extrémités de ligne (7, 8) l'une à l'autre en présence d'une erreur, **caractérisé par le fait que** le gestionnaire de redondance (6) est aussi conçu pour introduire à des intervalles de temps prédéterminés des télégrammes de test dans les deux extrémités de ligne (7, 8) et pour déduire de la réception à l'autre extrémité de ligne (8, 7) respective dans les limites d'un intervalle de temps prédéterminé une instruction en vue d'une séparation des deux extrémités de ligne (7, 8) ainsi que pour déduire une instruction en vue d'une liaison des deux extrémités de ligne lorsque aucun télégramme de test n'a été reçu dans les limites d'un intervalle de temps prédéterminé.
